# EUROPEAN PATENT APPLICATION

(11) **EP 4 848 484 A1**
(43) Date of publication of application: **02.12.2026**
(21) Application number: 25305767.3
(22) Date of filing: 28.05.2025
(51) Int. Cl.: H01R 4/36, H01R 4/30, F16B 31/02

(54) **CABLE CONNECTION ASSEMBLY COMPRISING A VISUAL MARKER FOR SCREW TIGHTENING AND METHOD FOR CONNECTING THEREOF**

(71) Applicant: TE Connectivity Solutions GmbH, 8200 Schaffhausen (CH)
(72) Inventor: PELTIER, Bruno, 21220 Gevrey-Chambertin (FR); MILLOT, Benoit, 21220 Gevrey-Chambertin (FR); PETRIGNET, Laurent, 21220 Gevrey-Chambertin (FR)
(74) Representative: Grünecker Patent- und Rechtsanwälte PartG mbB

(57) **Abstract**

The present invention relates to a cable connection assembly cable connection assembly, such as a splice connector or lug, for connecting a power cable or an electrical cable. The cable connection assembly comprises a connector body (10, 410, 510, 710) and at least two binding screws (102, 202, 302, 505, 602), each binding screw having a non-threaded portion (28) arranged between a threaded portion (26) and a screw head (24). Each non-threaded portion (28) of the binding screws (102, 202, 302, 505, 602) has at least one visual marker (104, 204, 304, 504, 604) configured to indicate an angular and/or translational position of the binding screw in a corresponding threaded hole (18) with respect to the connector body (10, 410, 510, 710).

## Description

### Field of invention

The present invention relates to a cable connection assembly, such as a splice connector or a lug, especially for connecting power cables or electrical cables. Cable connection assemblies may be used for splicing or connecting e.g. stranded or solid wires in power distribution networks or long distance transmission systems for distributing electrical power.

The present invention is particularly suitable for electrical applications ranging from low to high voltage. In this context, low voltage generally refers to values below 1,000 volts (1 kV), medium voltage typically covers the range between 1,000 volts (1 kV) and 52,000 volts (52 kV), and high voltage usually encompasses values above 52,000 volts (52 kV), notably above 63,000 volts (63 kV), with potential application to systems operating beyond 250,000 volts (250 kV).

### Background of the invention

A typical cable connection assembly consists of a connector body that provides at least one receiving chamber into which a cable or its stranded end section can be inserted. A binding screw, such as a screw, nut or bolt, is then inserted into a threaded hole accessible from the exterior of the connector body. This threaded hole extends essentially perpendicular to the inserted cable. When the binding screw is tightened, it advances through the threaded hole into the receiving chamber, compressing the cable between the binding screw and the chamber walls. It allows securing the cable mechanically and establishing an electrical connection between the binding screw, the inner chamber walls, and the cable itself.

In cable connection assemblies equipped with multiple binding screws, it is generally recommended to tighten the binding screws in an alternating manner and in angular increments, for instance in half-turn steps. Such tightening may help to achieve a more balanced distribution of pressure on the cable and contribute to a more consistent electrical contact.

This approach may be particularly relevant in high-voltage connectors, such as those rated above 63 kV, where a centered position of the cable within the connector body is desirable. Uneven or uncoordinated tightening of multiple binding screws can result in eccentric positioning of the cable, which in turn may lead to asymmetrical electric fields and compromise the long-term reliability of the electrical connection.

However, in practice, it may difficult for installers to follow the recommended tightening sequence, especially when specific predefined angular positions are required. Moreover, angular errors can accumulate with each tightening increment, particularly when the tightening process is interrupted and resumed.

An object of the invention is to provide a cable connection assembly that facilitates more precise and alternating tightening of multiple binding screws.

Another object of the invention is to provide a cable connection assembly, in particular adapted for high voltage applications, that helps maintaining a centered position of the cable in the connector body during tightening.

### Description of the invention

The object of the invention is achieved by means of a cable connection assembly according to the independent claim 1. The cable connection assembly, such as a splice connector or lug, for connecting a power cable or an electrical cable, comprises a connector body extending along a longitudinal direction and at least partially forming a cable receiving chamber for receiving a cable along the longitudinal direction. The connector body comprises two or more threaded holes for receiving a respective binding screw. A central axis of each threaded hole may be perpendicular to the longitudinal direction. The cable connection assembly further comprises at least two binding screws. Each binding screw having a body comprises a screw head, a threaded portion configured to be threaded in a respective threaded hole of the connector body, a screw tip, where the screw tip is opposite to the screw head and the screw tip is configured to press a cable received in the cable receiving chamber, and a non-threaded portion, arranged between the threaded portion and the screw head. Each non-threaded portion of the binding screws has at least one visual marker configured to indicate an angular and/or translational position of the binding screw in the corresponding threaded hole with respect to the connector body.

The visual marker allows improving the angular and/or translational positioning feedback for an installer during the tightening process. By enabling visual identification of angular and/or translational positions of the binding screws, the visual marker may help the installer follow a defined tightening sequence, for instance in successive and alternating angular increments. This may assist in limiting angular errors from one tightening step to the next, particularly when the tightening is resumed after interruption. When the cable connection assembly comprises multiple binding screws, the use of visual markers may contribute to a more balanced tightening process around the circumference of the cable, which may favour centering of the cable in the receiving chamber of the connector body. Such centering may be particularly advantageous in high-voltage applications where the symmetry of the assembly can affect the distribution of electric fields within the connector body.

The cable connection assembly can be further improved according to various advantageous embodiments.

According to one embodiment, the visual marker may comprise at least one of a groove, a recess, a notch, a sticker or a color marking. In particular, the visual marker may comprise a combination of at least two of the following: a groove, a recess, a notch, a sticker or a color marking. These features are provided on the non-threaded portion of the binding screw and may be dimensioned or arranged to be externally visible during installation. Such visual markers may assist the installer in identifying angular and/or translational positions of the binding screw relative to the connector body, in particular when the screw shall be tightened incrementally. The groove may be a rectilinear groove, in particular extending along the rotation axis of the binding screw. The groove may an annular groove, in particular extending around the rotation axis of the binding screw.

The groove, recess or notch may be formed directly in the surface of the non-threaded portion of the binding screw, for example by machining or deformation. The visual marker may be formed by engraving. The visual marker may be formed by means of a laser. The visual marker may extend axially, radially or helically with respect to a rotation axis of the binding screw.

According to one embodiment, the visual marker may be in the form of a removable sticker applied to the non-threaded portion of the binding screw. The sticker may serve as a temporary angular reference during tightening. The sticker may be removed after the installation is complete. In case the binding screw is re-usable, a new sticker may be applied and positioned to define a different angular reference, depending on the required tightening sequence.

The visual marker may optionally be colour-coded to correspond to specific angular increments or to distinguish between multiple binding screws in the multi-screw assembly. The colour marking may provide a better visual contrast to improve readability for an installer. The colour marking may be applied by printing, coating, labelling, painting, or any other surface application technique.

In one embodiment, the visual marker may comprise multiple marking elements arranged in a pattern, such as a series of lines or symbols spaced around the circumference of the non-threaded portion. The visual marker may form a graduated scale.

According to one embodiment, the visual marker may be realized as a material contrast. For example, the visual marked may be defined by a region of the non-threaded portion having a different surface roughness, gloss, reflectivity, or texture than the rest of the non-threaded portion. This may allow the visual marker to remain identifiable under variable lighting conditions.

According to one embodiment, the binding screw may comprise an audible feedback element, such as a click mechanism, configured to emit a sound during tightening at a predefined angular position. In a variant, the visual marker itself may be configured to produce an audible feedback, for example through interaction with a feature on the connector body.

According to one embodiment, the binding screw may comprise a tactile feedback feature, such as a notch or a local resistance, which can be perceived by touch by an installer during tightening. According to one embodiment, the binding screw may comprise a mechanical stop, for example a notched feature or an axial shoulder, configured to limit further rotation of the binding screw beyond a defined position.

Each of the audible feedback element, tactile feedback feature, and mechanical stop may be provided in addition to the visual marker and act as a distinct marker to assist the installer during tightening. The visual marker and at least one other type of marker (audible or tactile) may indicate different angular positions. Alternatively, at least two types of markers may provide indications for the same angular position. This may further improve the feedback available to the installer during the tightening process.

According to one embodiment, the visual marker may be positioned with respect to the non-threaded portion of the binding screw such that the visual marker may be visible from outside the connector body when the binding screw is in an initial position, and the visual marker may no longer visible from outside the connector body when the binding screw reaches a predefined depth of penetration into the threaded hole of the connector body. This may allow the installer to assess the penetration depth of the binding screw based on the visibility of the visual marker.

In the cable connection assembly, the at least two binding screws may comprise different visual markers with respect to one another. This may help the installer distinguish between the binding screws of the cable connection assembly during tightening. It may facilitate the application of an alternating tightening sequence between the different binding screws of the cable connection assembly.

Alternatively, each binding screw of the cable connection assembly may be identical. This may simplify manufacturing and logistics. It may also allow interchangeable use of the binding screws within the cable connection assembly.

According to one embodiment, the visual marker may be defined by a plurality of lines extending parallel to a rotation axis of the binding screw and the lines of said plurality of lines may be spaced from one another at equal intervals, in particular at intervals equal or smaller than 45 degrees around the rotation axis of the binding screw. The plurality of lines may facilitate angular positioning of the binding screw and improve positioning precision. The plurality of lines may comprise lines of at least two different lengths along the rotation axis. Two lines of a first length may be separated by one or more lines of a second length. The plurality of lines may comprise a first spacing between successive lines of the first length, for example corresponding to an angular interval of 45 degrees. The plurality of lines may further comprise a second spacing between successive lines of the second length, the second spacing being distinct from the first spacing, in particular smaller than the first spacing. The second spacing may correspond to an angular interval of 10 degrees or less. This line configuration may allow the formation of a graduated scale. A graduation scale may improve the precision of the angular positioning of the binding screw during tightening.

According to one embodiment, at least one of the binding screws may comprise a plurality of visual markers arranged radially and spaced from one another by a defined angle around the rotation axis of the binding screw. This may improve rotational tracking of the binding screw during alternating tightening. In particular, at least one of the binding screws may comprise two visual markers spaced by 180 degrees, or three visual markers spaced by 120 degrees, or four visual markers spaced by 90 degrees, around the rotation axis of the binding screw. It may allow indicating full turns, half turns, three-quarter turns, and quarter turns.

According to one embodiment, the connector body may comprise at least one visual reference marker arranged to be aligned with the visual marker when the binding screw reaches a defined angular position during tightening. This may improve the precision of angular positioning, since the visual marker of the binding screw can be aligned with a specifically and fixedly defined reference on the connector body.

According to one embodiment, the visual reference marker may be defined by a line intersecting at least one of the threaded holes. This may facilitate alignment of the visual marker of the binding screw by providing a fixed visual reference directly associated with the position of the threaded hole. The visual reference marker may be defined by a line extending parallel to the longitudinal direction.

According to one embodiment, the connector body may be essentially cylindrical. A cylindrical connector body may avoid sharp edges, reducing localized electric field concentrations, which is particularly adapted for high-voltage applications.

The connector body is electrically conductive. The connector body may be made of metal. The connector body may integrally formed in one-piece. The connector body may be manufactured by extrusion. Extrusion is a manufacturing process that may form profiles of constant transversal cross-section. The profiles may be obtained by means of a die opening, through which a metal material is pushed therethrought.

The connector body may define a splice connector. The splice connector may be configured to mechanically and electrically connect two distinct cable ends, in particular in axial continuity along the longitudinal direction. The splice connector may be configured to receive each cable end in the cable receiving chamber from opposite directions along the longitudinal direction.

The connector body may alternatively define a lug. The lug may be configured to connect a cable to an electrical terminal or a conductive surface. The lug may comprise a single opening into the cable receiving chamber for receiving the cable and a closed end opposite the single opening. The closed end may form part of a mounting interface, such as a flat contact surface or a bore for receiving a fastening element, for instance allowing the lug to be secured to an electrical terminal. The cable may be inserted along the longitudinal direction and pressed against the internal surface of the closed end by means of the at least two binding screws.

According to one embodiment, at least two of the threaded holes may be arranged in a same transversal plane, the transversal plane being perpendicular to the longitudinal direction. The arrangement of at least two threaded holes in the same transversal plane perpendicular to the longitudinal direction allows for a more balanced distribution of pressure around the cable, further enhancing the centering effect. The at least two binding screws can be tightened in a manner that keeps the cable centered within the connector body. It may provide a more reliable and stable electrical connection, in particular for high voltage applications.

According to one embodiment, the connector body may comprise a plurality of transversal planes, each having at least two threaded holes, and the threaded holes in each transversal plane may be offset from the threaded holes in adjacent transversal planes along the longitudinal direction. This staggered arrangement helps progressively compress and center the cable inside the connector body. As each binding screw penetrates and expands the cable from a different angle or position along the length of the cable, it improves overall centering and grip stability.

According to one embodiment, the connector body may comprise at least three distinct transversal planes spaced along the longitudinal direction, in particular wherein each plane comprises at least two threaded holes. The presence of multiple transversal planes provides a more secure and stable connection over a longer section of the cable, reducing the risk of decentering.

According to one embodiment, the connector body may comprise two threaded holes in the same transversal plane, diametrically opposed to each other. Having two diametrically opposed threaded holes in the same transversal plane allows binding screws to apply balanced, opposing forces on the cable. When the binding screws are tightened, they press against opposite sides of the cable, which enhances the centering of the cable within the connector body. This symmetric compression reduces the risk of misalignment or uneven pressure, improving the mechanical stability and the electrical contact quality of the connection.

According to one embodiment, the connector body may comprise at least three threaded holes arranged in the same transversal plane. The use of at least three threaded holes in the same plane enables the cable to be secured from multiple angles around its circumference. It provides additional points of pressure, which allows for more uniform and stable centering of the cable within the connector body.

According to one embodiment, the three or more threaded holes may be radially arranged at equal distances from each other in the same transversal plane. This radial arrangement provides an even distribution of pressure around the cable. The uniform radial pressure around the cable allows for improved stability and centering.

According to one embodiment, the cable receiving chamber may have a circular cross-section along the longitudinal direction. A circular cross-section may provide uniform surface contact around the entire circumference of the cable, enhancing mechanical stability and electrical contact continuity. It may also facilitate consistent compression by means of the binding screws.

According to one embodiment, the inner diameter of the cable receiving chamber may be comprised between 10 millimeters and 100 millimeters. This inner diameter range may provide compatibility with a variety of cable sizes while facilitating cable centering, based on the tightening guidance provided by the visual markers of the binding screws. This allows the same connector body to accommodate cables with different diameters.

According to one embodiment, at least one of the binding screws may comprise a shear zone arranged between the threaded portion and the non-threaded portion, such that, when a predefined shear-off torque is reached, the non-threaded portion and the screw head may be detachable from the binding screw at the shear zone. Hence, the binding screw may be a shearable binding screw. This prevents any portion of the binding screw from protruding outside the connector body once the non-threaded portion and the screw head is detached. Hence, the shearable binding screw prevents the accumulation of electrical charge at sharp points by eliminating protrusions that could cause edge effect. The shear-off torque may range between 10 Nm to 120 Nm, in particular between 40 Nm to 100 Nm. The shear-off torque may vary according to the type and size of the binding screw.

According to one embodiment, at least one of the binding screws may have a conical screw tip configured to penetrate a cable received in the cable receiving chamber. The conical tip of the binding screw may be configured to establish an electrical contact with the cable by penetrating into it. The use of a binding screw having a conical tip may cause the cable to expand in diameter upon penetration. This expansion may help to center the cable within the cable receiving chamber. As the conical tips penetrate the cable, the cable is pushed against the inner walls of the cable receiving chamber, improving the electrical contact along the inner surface of the cable receiving chamber. The conical shape may enhance the compression of the cable in the connector body, thereby improving both the mechanical fastening and the electrical connection between the cable and the connector body. The binding screw may be integrally formed in one-piece.

In particular, the conical screw tip may have an arched profile in a cross-section comprising the rotation axis of the binding screw. The arched profile of the conical screw tip may enable deeper and easier penetration into stranded conductors of the cable compared to a straight-cone design. This may enhance the compression of the stranded conductors within the connector body. The increased compression may contribute to better electrical contact and centering.

The object of the invention is also achieved by means of a method for connecting a cable connection assembly to a power cable or an electrical cable. The method comprises: providing a cable connection assembly according to one of the preceding embodiments, and performing the following steps: a) inserting a power cable or an electrical cable along the longitudinal direction into the cable receiving chamber of the connector body, b) tightening one of the at least two binding screws in a corresponding threaded hole of the connector body up to an angular and/or translational position indicated by the visual marker of that binding screw, c) tightening the other of the at least two binding screws in a corresponding threaded hole of the connector body up to an angular and/or translational position indicated by the visual marker of that other binding screw; where steps b) and c) are performed in an alternating manner.

Accordingly, the steps b) and c) may be performed one after the other, in particular without any overlap, instead of simultaneously.

This method may assist the installer in performing alternating tightening of the binding screws with improved angular and/or translational precision. The use of visual markers during steps b) and c) may help reduce angular deviations and allow a more defined tightening sequence. This may contribute to more consistent screw positioning during tightening and thereby facilitate centering of the cable within the connector body.

According to one embodiment of said method, each of step b) and step c) may repeated at least once, in particular repeated until each binding screw reaches its respective final tightening position. Hence, each binding screw can be tightened in multiple successive increments and in an alternating manner. Alternating tightening of multiple binding screws may reduce pressure imbalances on the cable between tightening process and may lead to a more consistent final compression of the cable within the connector body. Hence, this may contribute to a more balanced distribution of pressure on the cable and may help reduce asymmetries in cable positioning within the connector body.

The object of the invention may be further achieved thought the use of a cable connection assembly, such as a splice connector or lug, for connecting a power cable or an electrical cable, in a high-voltage application of at least 63,000 volts (63 kV), where the cable connection may comprise a connector body extending along a longitudinal direction and at least partially forming a cable receiving chamber for receiving a cable along the longitudinal direction. The connector body may comprise two or more threaded holes for receiving a respective binding screw. A central axis of each threaded hole may be perpendicular to the longitudinal direction. The cable connection assembly may further comprise at least two binding screws. Each binding screw may have a body comprising a screw head, a threaded portion configured to be threaded in a respective threaded hole of the connector body, a screw tip, where the screw tip is opposite to the screw head and the screw tip may be configured to press a cable received in the cable receiving chamber, and a non-threaded portion, arranged between the threaded portion and the screw head. Each non-threaded portion of the binding screws may have at least one visual marker configured to indicate an angular and/or translational position of the binding screw in the corresponding threaded hole with respect to the connector body.

It may contribute to improve positioning of the cable within the connector body in high-voltage applications by assisting the installer in following a defined tightening sequence with angular and/or translational precision. This is particularly relevant in high-voltage connectors, such as those rated above 63 kV, where uneven or uncoordinated tightening of multiple binding screws may result in eccentric positioning of the cable, which in turn may lead to asymmetrical electric fields and affect the long-term reliability of the electrical connection.

The invention will be described in more detail by way of examples hereinafter using advantageous embodiments and with reference to the accompanying drawings. The described embodiments are only possible configurations in which individual features may, however, as described above, be implemented independently of each other or may be omitted. Equal elements illustrated in the drawings are commonly provided with same reference signs. In the drawings:
Figure 1 shows a perspective view of a cable connection assembly according to a first embodiment;
Figure 2 shows a perspective view of a cable connection assembly according to a second embodiment;
Figure 3 shows a perspective view of a cable connection assembly according to a third embodiment;
Figure 4 shows a perspective view of a cable connection assembly according to a fourth embodiment;
Figure 5 shows a perspective view of a cable connection assembly according to a fifth embodiment;
Figure 6 shows a perspective view of a cable connection assembly according to a sixth embodiment;
Figure 7 shows a perspective view of a cable connection assembly according to a seventh embodiment and a cable.

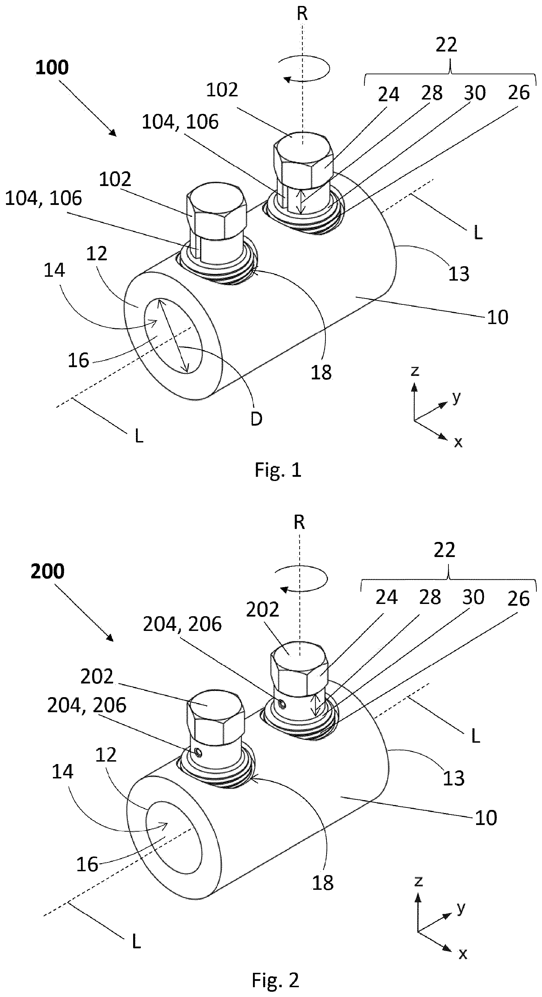

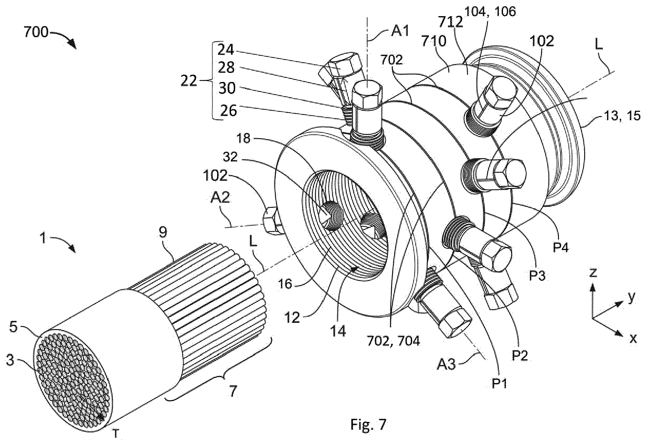

Figure 1 illustrates a cable connection assembly 100 according to a first embodiment. The cable connection assembly 100 comprises a connector body 10. The connector body 10 is configured for connecting a power cable or an electrical cable (not represented). The connector body 10 extends along a longitudinal direction L. The connector body 10 has a substantially overall cylindrical shape. The connector body 10 extends along a longitudinal direction L from a first open end 12 to a second opposite end 13. The second opposite end 13 may be an open end, in particular when the connector body 10 is a splice connector. It enables cable insertion from either side of the connector body 10. Alternatively, the second opposite end 13 may be a closed end, in particular when the connector body 10 is a lug. In both cases (open or closed end 13), the connector body 12 defines a cable receiving chamber 14. The cable receiving chamber 14 has a circular cross-section along the longitudinal direction L. The cable receiving chamber 14 has an inner diameter defined by the letter D in Figure 1. In the example of Figure 1, an inner wall 16 of the cable receiving chamber 14 has a smooth surface. In a variant, the inner wall 16 may be threaded or serrated, as shown in the embodiment depicted by Figure 7. A threaded, serrated or textured wall may improve the grip and the contact with a cable (not represented) inserted in the cable receiving chamber 14.

The connector body 10 comprises at least two threaded holes 18. In the first embodiment depicted by Figure 1, and like in the embodiments illustrated by Figures 2 to 6 the connector body 10 comprises two threaded holes 18. The two threaded holes 18 are aligned along the longitudinal direction L. In the examples of Figures 1 to 6, the respective central axes of the two threaded holes 18 are parallel to each other. The position of the threaded holes is, however, not limitative. For instance, in a variant, two threaded holes 18 may be arranged in a same plane transverse to the longitudinal direction L, rather than one behind the other along the longitudinal direction L.

Each threaded hole 18 is configured to receive a binding screw 102. In a variant, the binding screw 102 may be instead a nut, a bolt, or any fastening means adapted to exert pressure on a cable when tightened. Each binding screw 102 of the cable connection assembly 100 is configured to at least locally deform, compress, or penetrate an outer surface of a cable (not represented) inserted into the cable receiving chamber 14, in order to achieve mechanical retention and electrical contact between the connector body 12 and the cable.

Each binding screw 102 has a body 22 comprising a screw head 24, a threaded portion 26 and a screw tip. The screw tip is located opposite to the screw head 24. The screw tip is not visible in any of Figures 1 to 6 because, in these perspective views, the screw tip protrudes inside the cable receiving chamber 14. The screw tip is configured to press, or press and penetrate, a cable received in the cable receiving chamber 14. The threaded portion 26 is configured to be threaded in a respective threaded hole 18 of the connector body 10. The screw body 22 of the binding screw 102 further comprises a non-threaded portion 28. The non-threaded portion 28 is arranged between the threaded portion 26 and the screw head 24 along a rotation axis R of the binding screw 102. The rotation axis R of the binding screw 102 coincides with the central axis of the threaded hole 18 when the binding screw 102 is engaged in the threaded hole 18.

In the first embodiment, the binding screw 102 are shearable. Accordingly, each binding screw 102 comprises a shear zone 30. The shear zone 30 is arranged between the threaded portion 26 and the non-threaded portion 28. When a predefined shear-off torque of the binding screw 102 is reached, the non-threaded portion 28 and the screw head 24 are detachable from the rest of the binding screw 102 at the shear zone 30. The shear zone 30 may be realized by a local structural weakening of the screw body 22 between the threaded portion 26 and the non-threaded portion 28. For instance, the shear zone 30 may be formed by a circumferential groove machined into an outer surface of the binding screw 102, or by a local reduction in the diameter of the screw body 22. The shear zone 30 may alternatively comprise a notched region or a machined recess, configured to break when a predefined torque is applied.

In the cable connection assembly 100 according to the first embodiment, the non-threaded portion 28 of each binding screw 102 has a visual marker 104. The visual marker 104 is configured to indicate an angular and translational position of the binding screw 102 in the corresponding threaded hole 18 with respect to the connector body 12.

In the first embodiment, the visual marker 104 is formed by a groove 106. The groove 106 is a rectilinear groove 106. The groove 106 extends longitudinally along the rotation axis R of the binding screw 102, in particular from the screw head 24 and until the threaded portion 26. That is, in the first embodiment, the groove 106 extends across the entire height (shown by the double arrow in figure 1) of the non-threaded portion 28. The groove 106 may thus extend until the shear zone 30. The groove 106 may be formed by machining. The width of the groove 106 may be at least three times smaller than the height of the non-threaded portion 28.

The visual marker 104 allows visual identification of the angular and translational position of the binding screw 102 during tightening. As the groove 106 is rotated with the binding screw 102, its angular orientation changes relative to the connector body 10. In the position shown in Figure 1, both grooves 106 of the binding screws 102 are oriented towards the open end 12 of the connector body 10. Tightening each binding screw 102 by half a turn would result in the grooves 106 being oriented in the opposite direction, i.e. 180 degrees from the position shown in Figure 1, towards the other end 13 of the connector body 10. This configuration enables the installer to visually identify a half-turn of rotation. The same principle may be applied to indicate other angular displacements during tightening.

Moreover, as the binding screw 102 is rotated, the translational orientation of the groove 106 also changes relative to the connector body 10. As the binding screw 102 is tightened, it deepens into the threaded hole 18. This movement causes a reduction in the visible height of the groove 106. The change in height of the visible portion of the groove 106 may be used to indicate the translational advancement of the binding screw 102 relative to the connector body 10.

In the following, features designated with reference numerals sharing the same tens digits as those in Figure 1 refer to identical elements, and reference is made to the description of Figure 1 for those elements. The following description is focused on the differences between the first embodiment and the other embodiments.

Figure 2 illustrates a cable connection assembly 200 according to a second embodiment. In the second embodiment, the cable connection assembly 200 comprises two binding screws 202 respectively engaged in a corresponding threaded hole 18 of the connector body 10. Each binding screw 202 is provided with a visual marker 204.

In the second embodiment, the visual marker 204 is defined by a recess 206. In the second embodiment, the recess 206 has a circular cross-section, rather than the shape of a rectilinear groove 106 like the first embodiment. The visual marker 204 is shaped like a recessed dot 206. In the example of Figure 2, the recess 206 is positioned midway between the screw head 24 and the threaded portion 26 along the rotation axis R. In a variant of the second embodiment, the recess 206 may be located closer to the screw head 24 or to the threaded portion 26, for instance depending on the desired translational indication. The shape of the recess 206 may also vary. It may be oval, polygonal, or irregular.

The visual marker 204 according to the second embodiment indicates both the angular and translational positions of the binding screw 202. The angular orientation of the recess 206 changes with the rotation of the binding screw 202. The visible depth or position of the recess 206 relative to the connector body 10 may indicate the translational advancement of the binding screw 202 in the threaded hole 18.

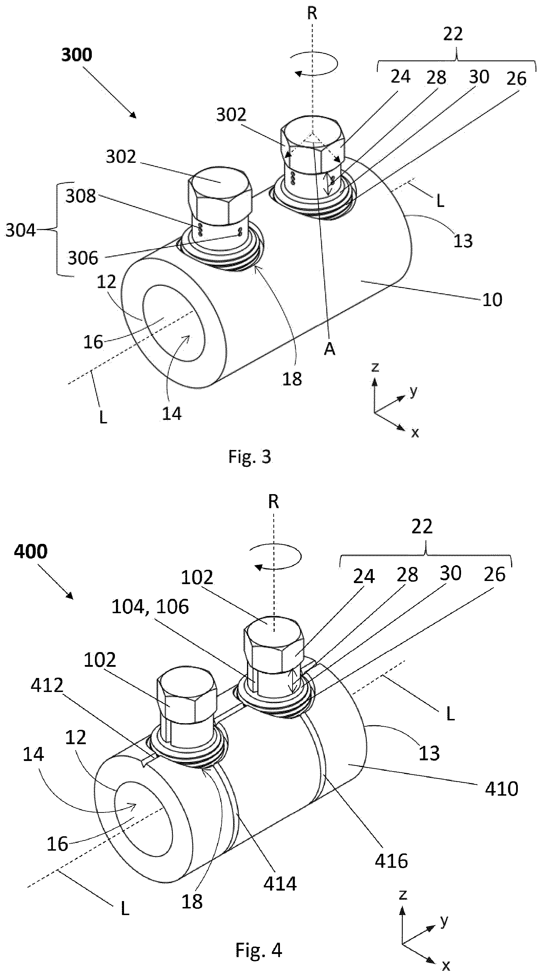

**Figure 3** illustrates a cable connection assembly 300 according to a third embodiment. The assembly 300 comprises two binding screws 302. Each binding screw 302 is engaged in a corresponding threaded hole 18 of the connector body 10. Each binding screw 302 comprises a visual marker 304. The visual marker 304 comprises two distinct visual patterns 306 and 308. The first visual pattern 306 is formed by two recessed dots aligned along the rotation axis R. The second visual pattern 308 is formed by three recessed dots along the rotation axis R. In the illustrated example, all dots have the same diameter. In variants, the dots of the visual patterns 306, 308 may differ in size or depth. The visual patterns 306, 308 may also have recesses having shapes other than circular, such as triangular, square, rectangular, or a specific symbols.

In this example of the third embodiment, the two visual patterns 306, 308 are spaced apart by an angle A. In the example of Figure 3, the angle A is approximately 90 degrees. This angular spacing A corresponds to a quarter-turn of the binding screw 302. In variants, other angular spacing between the two visual patterns 306, 308 may be used. Hence, the third embodiment provides a visual marker 304 comprising two distinct visual patterns 306, 308 spaced apart by a defined angle A, for example approximately 90 degrees.

In contrast to the first and second embodiments, which rely respectively on a single groove 106 or a single recess 206, the third embodiment allows further improving the visual feedback during tightening. The presence of two different visual patterns 306, 308 may help the installer to identify and distinguish the angular position of the binding screw 302 more accurately.

The angular spacing A between the two visual patterns 306, 308 may correspond to a predefined tightening increment, such as a quarter-turn. This allows the installer to visually chek that the binding screw 302 has been rotated by the intended angle relative to the connector body 10.

The use of distinct visual patterns 306, 308 may reduce the risk of misinterpretation when observing the rotational orientation of the binding screw 302, particularly during repeated or interrupted tightening. This may improve tracking of the tightening sequence.

The relative position of the visual patterns 306, 308 with respect to the connector body 10 may also provide a visual indication of the translational advancement of the binding screw 302 in the corresponding threaded hole 18.

**Figure 4** illustrates a cable connection assembly 400 according to a fourth embodiment. The assembly 400 comprises two binding screws 102, as described in the first embodiment. Each binding screw 102 is engaged in a corresponding threaded hole 18 of a connector body 410. The connector body 410 of the fourth embodiment differs from the connector body 10 of the first embodiment in that the connector body 410 is provided with visual reference markers 412, 414, 416. Each visual reference markers 412, 414, 416 is formed by a respective groove 412, 414, 416. The visual reference marker 412 is defined by a first groove 412 extending along the longitudinal direction L. This first groove 412 intersects both threaded holes 18, in particular in their respective center. The visual reference markers 414, 416 are defined by secondary grooves 414, 416 extending radially around the circumference of the connector body 410. Each secondary groove 414, 416 intersects a respective threaded hole 18. The visual reference markers 412, 414, 416 may be engraved on the surface of the connector body 410. In a variant, the visual reference markers 412, 414, 416 may be printed or embossed. The visual reference markers 412, 414, 416 may serve as alignment features for the visual marker 104 of each binding screw 102. The visual marker 104 of each binding screw 102, such as the groove 106 forming the visual marker 104, may be aligned with either the first groove 412 or one of the secondary grooves 414, 416 to visually indicate a quarter turn. Other angular configurations may be used depending on the desired tightening increment.

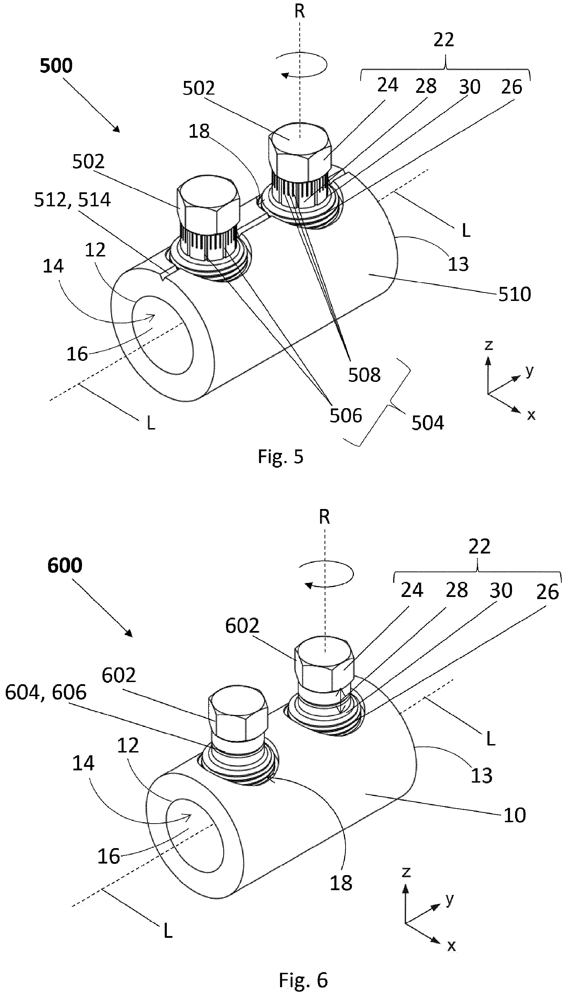

**Figure 5** illustrates a cable connection assembly 500 according to a fifth embodiment. The assembly 500 comprises two binding screws 502. Each binding screw 502 is engaged in a corresponding threaded hole 18 of a connector body 510. The connector body 510 differs from the connector body 10 of the first embodiment in that it comprises a visual reference marker 512. The visual reference marker 512 is defined by a groove 514. The groove 514 extends from the first end 12 to the second end 13 of the connector body 510 along the longitudinal direction L. The visual reference marker 512 is thus oriented like the first groove 412 of the fourth embodiment illustrated by Figure 4. The groove 514 intersects both threaded holes 18, preferably at their centers. In variants, the groove 514, like the first groove 412, may be segmented or extend partially along the longitudinal direction L of the connector body 510.

Each binding screw 502 comprises a visual marker 504. The visual marker 504 is defined by a plurality of lines 506, 508. The lines 506, 508 respectively extend parallel to the rotation axis R of the binding screw 502. The visual marker 504 comprises both primary lines 506 and secondary lines 508. The primary lines 506 are longer than the secondary lines 508 in the direction of the rotation axis R. In the illustrated example of the fifth embodiment, three secondary lines 508 are arranged between two primary lines 506. In variants, the number of secondary lines between two successive primary lines may differ. The primary lines 506 are spaced at equal angular intervals around the circumference the non-threaded portion 28. The secondary lines 506 are also spaced at equal angular intervals around the circumference the non-threaded portion 28. The angular spacing between successive primary lines 506 is greater than the spacing between successive secondary lines 508.

The visual marker 504 allows defining a graduated visual scale. The visual marker 504 may provide finer angular positioning than in the preceding embodiments. The groove 514 of the connector body may be aligned with any of the lines 506, 508 to assist in visual alignment. The visual marker 504 may also indicate the translational advancement of the binding screw 502, similarly to the visual marker 104 of the first embodiment.

The lines 506, 508 may be formed by recesses, printing, laser marking, or colour contrast. In one variant, the primary lines 506 may be formed with a different colour, thickness, width or surface finish (e.g. texture) than the secondary lines 508 to further enhance visual identification.

**Figure 6** illustrates a cable connection assembly 600 according to a sixth embodiment. The assembly 600 comprises two binding screws 602. Each binding screw 602 is engaged in a corresponding threaded hole 18 of the connector body 10. Each binding screw 602 comprises a visual marker 604. The visual marker 604 is defined by an annular groove 606. The groove 606 is arranged around the circumference of the non-threaded portion 28 of the binding screw 602. The rotation axis R of the binding screw 602 passes through the center of the annular groove 606.

In a variant, the annular groove may be replaced or combined with a coloured ring, a printed band, or other circumferential marking.

In a variant, the visual marker 604 may be defined by a plurality of annular grooves 606. The plurality of grooves 606 may be spaced at predefined distances from one another along the non-threaded portion 28 of the binding screw 602.

In the example of Figure 6, the groove 606 is located midway between the screw head 24 and the threaded portion 28. In other variants, the groove may be positioned closer to the screw head 24 or the threaded portion 28. The annular groove 606 provides a visual indication of translational advancement. The sixth embodiment primarily provides translational visual indication. Angular position is not directly indicated by the visual marker604, but may be combined with other visual markers in further variants.

In a variant of the sixth embodiment, the groove 606 is visible from outside the connector body when the binding screw 606 is in an initial position. When the binding screw 602 reaches a predefined depth, the groove 606 may become hidden, in particular inside the threaded hole 18.

Figure 7 illustrates a cable connection assembly 700 according to a seventh embodiment and an electrical cable 1. The cable connection assembly 700 comprises a connector body 710 according to the seventh embodiment, forming a cable lug, and binding screws 102 according to the first embodiment. In a variant, the cable connection assembly 700 comprises the connector body 710 and any of the binding screws according to the preceding embodiments.

The electrical cable 1 may be a high-voltage power transmission cable 1. The electrical cable 1 is a round cable and comprises a plurality of strand conductors 3, forming the core of the electrical cable 1, surrounded by an electrically insulating layer 5. The section 7 of the electrical cable 1 adapted to be inserted in the connector body 710 is a stripped portion 9 from which the electrically insulating layer 5 has been removed so as to directly exposed the strand conductors 3. The core of the electrical cable 1 has a radius T. The radius T may be comprised between 5 millimeter and 50 millimeters, in particular between 5 millimeters and 25 millimeters.

The connector body 710 extends along a longitudinal direction L. The connector body 710 has a substantially overall cylindrical shape. The connector body 710 comprises a cable receiving chamber 14. The cable receiving chamber 14 has a circular cross-section along the longitudinal direction L. The cable receiving chamber 14 of the connector body 710 is configured to receive the electrical cable 1, in particular along an insertion direction parallel to the longitudinal direction L.

Each connector body 10, 410, 510 according to any the preceding embodiments may be configured to receive the electrical cable 1 in their respective cable receiving chamber 14.

In the seventh embodiment, the connector body 710 is a cable lug. Accordingly, the connector body 710 is provided with one single open end12 that provides access to the cable receiving chamber 14. The end 13 of the connector body 710 opposite to the opening 13 along the longitudinal direction L is closed by a wall 15. Hence, the electrical cable 1 can only be inserted into the cable receiving chamber 14 through the open end 12.

In the seventh embodiment, the inner wall 16 of the cable receiving chamber 14 is threaded or serrated, as shown in Fig. 7. A threaded, serrated or textured wall may improve the grip and the contact with the cable 1.

In the seventh embodiment, the connector body 710 comprises twelves threaded holes 18. The threaded holes 18 are arranged in four distinct transversal planes P1, P2, P3, P4 spaced along the longitudinal direction L. Each transversal plane P1, P2, P3, P4 is defined in a plane (XY) and is transversal to the longitudinal direction L. The four distinct transversal planes P1, P2, P3, P4 are parallel to each other. In the illustrated example of Figure 7, each transversal plane P1, P2, P3, P4 includes three threaded holes 18, in particular positioned at equidistance from one another. For instance, in the first transversal plane P1, three threaded holes 18 are respectively aligned along the axes A1, A2 and A3. None of the axes A1, A2 and A3 are parallel to one another. The arrangement of at least two threaded holes 18, in particular of three threaded holes 18, in a same transversal plane P1, P2, P3 or P4 perpendicular to the longitudinal direction L enables a balanced distribution of pressure around the cable 1, enhancing the centering effect of the cable 1 inside the cable receiving chamber 14.

In the seventh embodiment, the threaded holes 18 in each transversal plane P1, P2, P3, P4 are offset from the threaded holes 16 in adjacent transversal planes P1, P2, P3, P4 along the longitudinal direction L. This staggered configuration of the threaded holes 18 enhances cable compression and centering by distributing the pressure points along different positions of the cable 1.

In alternative variants not illustrated, the cable connection assembly 700 may comprise fewer than four transversal planes P1, P2, P3, P4. Alternatively, the cable connection assembly 700 may comprise more than four transversal planes P1, P2, P3, P4. The number of transversal planes may be adapted depending on the size of the connector body 710 and the intended application.

Each transversal plane P1, P2, P3, P4 may comprise a different number of threaded holes 18. In particular, each transversal plane P1, P2, P3, P4 may comprise at least two threaded holes 18. This configuration allows binding screws 102 to apply pressure from different angular positions within a same cross-section of the cable 1. The presence of at least two threaded holes 18 in each transversal plane may contribute to a more balanced distribution of forces on the cable 1 during tightening.

Each transversal plane may have more than three threaded holes 18. The number of threaded holes 18 in each plane may be more than three, in particular as long as it does not prevent the tightening of the binding screws 102 relative to one another. The distance between two successive transversal planes P1, P2, P4, P4 along the longitudinal direction L may vary, in particular as long as it does not prevent the tightening of the binding screws 102 relative to one another. The flexibility in the number and arrangement of threaded holes 18 in each transversal plane P1, P2, P4, P4 allows the cable connection assembly 700 to be adapted to various cable sizes and configurations.

In the seventh embodiment, the connector body 470 is provided with four visual reference markers 702. Each visual reference marker 702 is formed by a respective groove 704. Each groove 704 extends radially around the circumferential surface 712 of the connector body 710. Each groove 704 is defined in a respective transversal plane P1, P2, P3, P4. Hence, each groove 704 intersects three threaded hole 18 arranged in a common transversal plane P1, P2, P3 or P4.

The visual reference markers 704 may be engraved on the circumferential surface 712 of the connector body 710. In a variant, the visual reference markers 704 may be printed or embossed.

The visual reference markers 704 may serve as alignment features for the visual marker 104 of each binding screw 102. The visual marker 104 of each binding screw 102, such as the groove 106 forming the visual marker 104, may be aligned with a corresponding groove 704 to visually indicate a defined angular position, for instance a half-turn or a full turn. Other angular configurations may be used depending on the desired tightening increment.

Each binding screw 102 of the first embodiment may be adapted to achieve the desired contacting effect with the cable 1. Each binding screw 102 respectively may have a conical tip 32. The conical portion tip 32 may be adapted for the desired penetration depth inside the cable receiving chamber 24. The binding screw 102 is integrally formed in one-piece. The conical tip 32 may thus be rigidly fixed to the threaded portion 26. The conical tip 32 of the binding screw 102 may have an arched profile in a cross-section comprising the respective axis A1, A2 or A3 of the threaded hole 18 in the transversal plane P1 (respectively P2, P3, P4). The arched profile of the conical tip 32 may enable deeper and easier penetration into the cable 1 compared to a straight-cone design. This enhances the compression of the cable 1 within the connector body 710. The increased compression contributes to better electrical contact and centering.

In the state depicted in Figure 7, the binding screws 102 are pre-assembled to the connector body 710. The binding screws 102 are partially screwed into their respective threaded holes 18. The threaded portion 26 of each binding screw 102 is only partially engaged inside the threaded hole 18, such that the conical tip 32 only extends inside the threaded hole 18 and does not protrude further into the cable receiving chamber 14. This pre-assembled position allows for transportation and storage of the cable connection assembly 700 without the risk of losing the binding screws 102. Moreover, it facilitates the introduction of the cable 1 into the cable receiving chamber 14 without being disturbed by any protruding part of the conical tip 32 of the binding screws 102.

Once the cable 1 has been inserted through the open end 12 of the connector body 710 into the cable receiving chamber 14, each binding screw 102 can be further screwed into their corresponding threaded hole 18. It is advantageous to tighten the binding screws 102 in successive sequences until each binding screws102 reaches its respective final tightening position. Each tightening sequence may comprise a predefined angular increment, such as a rotation of 180 degrees (half-turn) or one and a half turns. This stepwise tightening may progressively distribute the compression forces on the cable 1, thereby enabling improved centering of the cable 1 within the cable receiving chamber 14. It is further advantageous to tighten the plurality of binding screws 102 in an alternating manner.

A method for connecting the cable connection assembly 700 may thus comprise tightening the binding screws 102 alternately and by predefined angular increments, until each binding screw 102 reaches its final tightening position. The visual reference markers 704 of the connector body 710, in combination with the respective visual markers 104 of the binding screw 102, may assist the installer in performing these steps with increased precision.

The method for connecting the cable connection assembly 700 may therefore comprise a tightening step in which a first binding screw 102, e.g. located in the transversal plane P1 and aligned with the rotation axis A1, is rotated up to an angular position indicated by its visual marker 104. The visual marker 104 may be aligned with the visual reference marker 704 extending in the transversal plane P1, for example resulting in a half-turn of said binding screw 102 around the rotation axis A1. Thereafter, a second binding screw 102 in the same transversal plane P1, and aligned along the rotation axis A2, may be tightened in a similar manner. This sequence may be repeated in an alternating manner for the three binding screws 102 arranged in the transversal plane P1. The same tightening steps may be applied to the binding screws located in the other transversal planes P2, P3, and P4. The tightening steps of different binding screws 102, particularly those located in a same transversal plane P1, P2, P3, P4, may thus be performed in an alternating manner.

The alternating tightening is preferably repeated at least once, and in particular continued until each binding screw 102 has reached its respective final tightening position.

By screwing each binding screw 102, its conical tip 32 will penetrate the cable 1. As the conical tip 32 penetrates the cable 1, it will cause the expansion of the cable 1 inside the cable receiving chamber 14. This expansion results in the cable 1 being in surface contact with the inner wall 16 of the cable receiving chamber 14, improving centering the cable 1 within the cable receiving chamber 14.

In a variant, each binding screw 102 may comprise a non-conical tip, like a substantially flat tip, rather than a conical tip. By screwing each binding screw 102, the screw tip applies pressure onto the cable 1, without necessarily penetrating its surface. This pressure causes the cable 1 to deform locally and press against the inner wall 16 of the cable receiving chamber 14. The resulting contact may improve the positioning of the cable 1 within the cable receiving chamber 14 by contributing to its centering.

Continuing to screw each binding screw 102 until their predefined shear-off torque is reached will cause the screw head 24 and the non-threaded portion 28 of each binding screw 102 to detach at the shear zone 30. This ensures that only the threaded portion 26 and the tip 32 remain within the threaded hole 18, preventing any part of the binding screw 102 from protruding outside the connector body 710.

Each of the cable connection assemblies 100, 200, 300, 400, 500, 600, 700 is particularly suitable for connection with a high-voltage power transmission cable, but may be adapted to different type of electrical cables. An electrical cable may comprise one or more solid conductors. Alternatively or in combination, the electrical cable may comprise one or more stranded conductors. A transversal cross-section of the electrical cable may have a circular, an oval or a shape intermediate between a circular and an oval shape. In particular, the electrical cable may be a round cable. A transversal cross-section of around cable is circular. The electrical cable may be a sector cable. The sector cable may comprise a plurality of conductors, each conductor forming a section of a circle in a transversal cross-section of the electrical cable. Each cable connection assembly 100, 200, 300, 400, 500, 600, 700 may be used for connecting copper wires, aluminum wires, wires made of any kind of metal or metal alloys, and are especially advantageous for use with aluminum wires.

Any of the binding screws described in the various embodiments may be used in combination with any of the connector bodies disclosed in the different embodiments. Each binding screw may comprise one or more visual markers. In particular, a binding screw may comprise a combination of visual marker features selected from different embodiments. Each connector body may comprise one or more visual reference markers. A cable connection assembly may comprise binding screws provided with different types of visual markers. For example, the visual markers of the binding screws may differ in shape, size, arrangement, or marking technique. This may allow easier identification of individual binding screws during tightening and may facilitate the application of a predefined tightening sequence.

### List of reference signs

1: electrical cable
3: strand conductors
5: electrically insulating layer
7: section
9: stripped portion
10: connector body
12: first open end
13: second opposite end
14: cable receiving chamber
15: wall
16: inner wall
18: threaded hole
22: body of binding screw
24: screw head
26: threaded portion of binding screw
28: non-threaded portion of binding screw
30: shear zone
32: screw tip
100: cable connection assembly (first embodiment)
102: binding screw
104: visual marker
106: groove
200: cable connection assembly (second embodiment)
202: binding screw
204: visual marker
206: recess
300: cable connection assembly (third embodiment)
302: binding screw
304: visual marker
306: first visual pattern
308: second visual pattern
400: cable connection assembly (fourth embodiment)
410: connector body
412: visual reference marker (first groove)
414: visual reference marker (secondary groove)
416: visual reference marker (secondary groove)
500: cable connection assembly (fifth embodiment)
502: binding screw
504: visual marker
506: primary lines
508: secondary lines
510: connector body
512: visual reference marker
514: groove
600: cable connection assembly (sixth embodiment)
602: binding screw
604: visual marker
606: annular groove
700: cable connection assembly (seventh embodiment)
702: visual reference marker
704: groove
710: connector body
712: circumferential surface
A: angle
A1, A2, A2, R: axis of threaded hole, rotation axis
L: longitudinal direction
D: inner diameter of the cable receiving chamber
P1, P2, P3, P4: transversal plane
T: radius of the core of the electrical cable

## Claims

1. A cable connection assembly (100, 200, 300, 400, 500, 600, 700), such as a splice connector or lug, for connecting a power cable or an electrical cable, the cable connection assembly comprising:
a connector body (10, 410, 510, 710) extending along a longitudinal direction (L) and at least partially forming a cable receiving chamber (14) for receiving a cable along the longitudinal direction (L), and
the connector body (10, 410, 510, 710) comprises two or more threaded holes (18) for receiving a respective binding screw, and
the cable connection assembly further comprising:
at least two binding screws (102, 202, 302, 505, 602), each binding screw having a body (22) comprising:
- a screw head (24),
- a threaded portion (26) configured to be threaded in a respective threaded hole (18) of the connector body (10),
- a screw tip (32), where the screw tip is opposite to the screw head (24) and the screw tip is configured to press a cable received in the cable receiving chamber (14), and
- a non-threaded portion (28), arranged between the threaded portion (26) and the screw head (24),
the cable connection assembly being **characterized in that**:
each non-threaded portion (28) of the binding screws (102, 202, 302, 505, 602) has at least one visual marker (104, 204, 304, 504, 604) configured to indicate an angular and/or translational position of the binding screw in the corresponding threaded hole (18) with respect to the connector body (10, 410, 510, 710).

2. The cable connection assembly (100, 200, 300, 400, 500, 600, 700) according to claim 1, wherein the visual marker (104, 204, 304, 504, 604) comprises at least one of a groove (106), a recess (206), a notch, a sticker or a color marking.

3. The cable connection assembly (200, 300) according to any of the preceding claims, wherein the visual marker (204, 304) is positioned with respect to the non-threaded portion (28) of the binding screw (202, 302) such that:
- the visual marker (204, 304) is visible from outside the connector body (10) when the binding screw (202, 302) is in an initial position, and
- the visual marker (204, 304) is no longer visible from outside the connector body (10) when the binding screw (202, 302) reaches a predefined depth of penetration into the threaded hole (18) of the connector body (10).

4. The cable connection assembly (500) according to any of the preceding claims, wherein the visual marker (504) is defined by a plurality of lines (506, 508) extending parallel to a rotation axis (R) of the binding screw (502) and the lines of said plurality of lines (506, 508) are spaced from one another at equal intervals, in particular at intervals equal or smaller than 45 degrees around the rotation axis (R) of the binding screw (502).

5. The cable connection assembly (300, 500) according to any of the preceding claims, wherein at least one of the binding screws (302, 502) comprises a plurality of visual markers (304, 504) arranged radially and spaced from one another by a defined angle around the rotation axis (R) of the binding screw (302, 502); in particular two visual markers spaced by 180 degrees, or three visual markers spaced by 120 degrees, around the rotation axis (R) of the binding screw (302, 502).

6. The cable connection assembly (400, 500, 700) according to any of the preceding claims, wherein the connector body (410, 510, 710) comprises at least one visual reference marker (412, 414, 416, 512, 514, 702, 704) arranged to be aligned with the visual marker (104, 204, 304, 504, 604) when the binding screw (102, 202, 302, 505, 602) reaches a defined angular position during tightening.

7. The cable connection assembly (400, 500, 700) according to claim 6, wherein the visual reference marker (412, 414, 416, 512, 514, 702, 704) is defined by a line intersecting at least one of the threaded holes (18).

8. The cable connection assembly (100, 200, 300, 400, 500, 600, 700) according to any of the preceding claims, wherein the connector body (10, 410, 510, 710) is essentially cylindrical.

9. The cable connection assembly (700) according to any of the preceding claims, wherein at least two of the threaded holes (18) are arranged in a same transversal plane (P1, P2, P3, P4), the transversal plane being perpendicular to the longitudinal direction (L).

10. The cable connection assembly (100, 200, 300, 400, 500, 600, 700) according to any of the preceding claims, wherein the cable receiving chamber (14) has a circular cross-section along the longitudinal direction (L).

11. The cable connection assembly (100, 200, 300, 400, 500, 600, 700) according to any of the preceding claims, wherein the inner diameter (R) of the cable receiving chamber (14) is comprised between 10 millimeters and 100 millimeters.

12. The cable connection assembly (100, 200, 300, 400, 500, 600, 700) according to any of the preceding claims, wherein at least one of the binding screws (102, 202, 302, 505, 602) comprises a shear zone (30) arranged between the threaded portion (26) and the non-threaded portion (28), such that, when a predefined shear-off torque is reached, the non-threaded portion (28) and the screw head (24) are detachable from the binding screw (102, 202, 302, 505, 602) at the shear zone (30).

13. The cable connection assembly according to any of the preceding claims, wherein at least one of the binding screws (102, 202, 302, 505, 602) has a conical screw tip (32) configured to penetrate a cable received in the cable receiving chamber (14).

14. A method for connecting a cable connection assembly to a power cable or an electrical cable, the method comprising:
- providing a cable connection assembly (100, 200, 300, 400, 500, 600, 700) according to one of claims 1 to 13, and
- performing the following steps:
a) inserting a power cable or an electrical cable (1) along the longitudinal direction (L) into the cable receiving chamber (14) of the connector body (10, 410, 510, 710),
b) tightening one of the at least two binding screws (102, 202, 302, 505, 602) in a corresponding threaded hole (18) of the connector body (10, 410, 510, 710) up to an angular and/or translational position indicated by the visual marker (104, 204, 304, 504, 604) of that binding screw (102, 202, 302, 505, 602),
c) tightening the other of the at least two binding screws (102, 202, 302, 505, 602) in a corresponding threaded hole (18) of the connector body (10, 410, 510, 710) up to an angular and/or translational position indicated by the visual marker (104, 204, 304, 504, 604) of that other binding screw (102, 202, 302, 505, 602);
where steps b) and c) are performed in an alternating manner.

15. The method according to claim 14, wherein each of step b) and step c) is repeated at least once, in particular repeated until each binding screw (102, 202, 302, 505, 602) reaches its respective final tightening position.
